# EUROPEAN PATENT SPECIFICATION

(11) **EP 2 099 153 B1**
(45) Date of publication and mention of the grant of the patent: **10.08.2011**
(21) Application number: 09153117.8
(22) Date of filing: 18.02.2009
(51) Int. Cl.: H04L 7/00, G06F 11/00, H04L 25/02

(54) **Transmission circuit of a clock signal for transmitting synchronous digital signals**
Taktsignal-Übertragungsschaltung zur Übertragung synchroner digitaler Signale
Circuit de transmission d'un signal d'horloge pour transmettre des signaux numériques synchrones

(30) Priority: 18.02.2008 IT MI20080247
(43) Date of publication of application: 09.09.2009
(73) Proprietor: INFOTRONIC S.p.A., I-20121 Milan (IT)
(72) Inventor: Niccolini, Marcello, 20121 Milano (IT)
(74) Representative: Zambardino, Umberto

(56) References cited:
- WO-A1-89/02124
- DE-A1- 10 249 592
- US-A1- 2004 263 223
- US-A1- 2006 001 494
- US-A1- 2006 041 631

## Description

### Field of application

The present invention refers to a transmission circuit of a clock signal for transmitting synchronous digital signals.

Moreover, the invention relates to a display system of critical data from the safety point of view with digital transmission of said data through a synchronous transmission channel.

Finally, the invention relates to a method for transmitting synchronous digital data.

### Prior art

A transmission system of critical data from the safety point of view, with digital synchronous transmission of said data, is known. In particular, the transmission system, through such data, transports information of vital importance, relating, for example, to the survival of human beings.

Normally, such a transmission system comprises a microprocessor (for example placed in a motherboard of a PC) that receives and processes data obtained in input from upstream transmitter devices and sends the results to other downstream receiver devices.

Such a transmission system is used, for example, in a display system, on a monitor, of critical information from the safety point of view, to supervise and manage the commands and the signals of a train station or an airport or else an industrial plant. Such a display system allows an operator to know, in real time, the status of said station or plant, so as to allow the operator to carry out the management operations of the movement (traffic) or of the processes and above all to adopt countermeasures in the case of alarm situations arising. Normally, such a display system in particular comprises a microprocessor (for example placed in a motherboard of a PC) that receives and processes data obtained in input from external computers (for example through a central server) and sends display data to a monitor.

The process for sending data towards the monitor often comprises the passage through various stages, made by different devices in cascade, each of which sends processed data, in particular display data, to a subsequent device. For example, the various devices can be:
- microprocessor (in the PC);
- graphics card (in the PC);
- digital transmitter (in the PC);
- digital receiver (in the monitor);
- monitor controller (in the monitor),
each of which being arranged downstream of the previous device and upstream of the subsequent device.

Between each upstream device and each downstream device there is thus a communication based upon a communication protocol shared by both, so as to exchange information according to compatible formats (for example, voltage and transmission frequency values are predetermined).

The exchanged data, in particular display data, is encoded in bits/strings of bits, which, through a transmission channel (formed from conductive tracks that can support a voltage corresponding to the logic value of a bit, and thus connections, cables, tracks etc.), are sent, in various formats, between the devices in cascade contained in the display system. The transmission channel can be multiple, i.e. based upon a plurality of individual tracks, each of which encodes, at the same time as and in parallel with the other tracks, a single bit.

Usually, a clock signal, sent through a dedicated cable, is also used that encodes digital information that uniquely periodically changes logic value. In this case, the communication protocol is said to be synchronous, because the information is transmitted in synchrony with the clock signal. Normally, the downstream device in particular carries out a sampling, or in any case an acquisition of display data each time a rising or falling edge of the clock signal is detected.

It is often also provided to manage alarm signals possibly sent by external devices. When an alarm signal is detected, it is necessary to immediately prevent communication, to prevent the transmission of data that may be misleading for the operator. Right now, the reason why such data is corrupt is of no importance; simply, attention is focussed upon the fact that it is necessary to immediately and reliably prevent the transmission of data.

Normally, therefore, switches are used that are able to prevent communication between successive devices, said switches, for example, being able to at least partially stop the power supply to some of the devices necessary for displaying the data transmitted upon detection of such an alarm signal.

In particular, it is possible to use a switch in a communication channel, such a switch being controlled by the alarm signal, so as to be open upon detection of the alarm signal so as to prevent any further passage of data.

However, a channel switch of this type can also be affected by a failure. The kinds of failure of a switch considered in this document can essentially be broken down to:
- switch always open;
- short-circuit (switch always closed).

In the case of failure with the switch always open, such a failure can immediately be seen, since the communication channel is opened and therefore the downstream receiving device no longer receives a signal.

On the other hand, in the case of short-circuit, the switch continues to allow the signal to pass through the communication channel, regardless of the alarm signal. This means that, even in the presence of alarm, the switch allows the passage of incorrect data with the consequent risk of transmission of corrupted data.

In this case, the short-circuit is a so-called latent failure, since it cannot be immediately detected but it is still able to lead to catastrophic consequences.

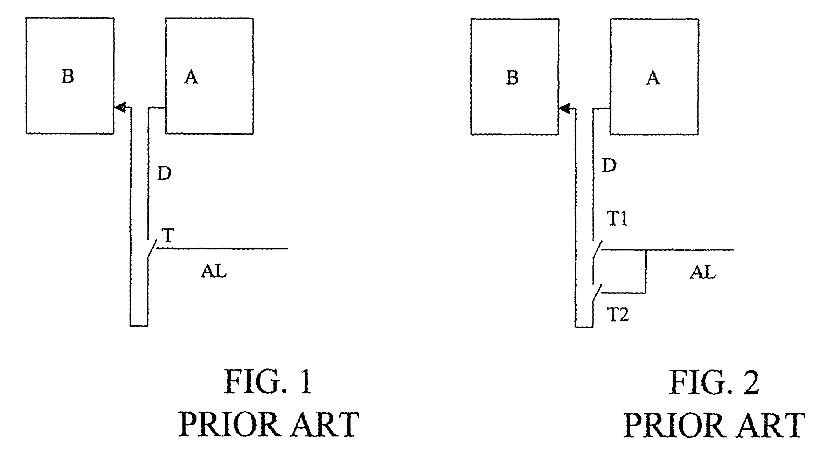

See, for example, the transmission system of figure 1, relative to the exchange of data D between the upstream transmitter device A and the downstream receiver device B connected through a switch T, normally closed, commanded by an alarm AL able to open such a switch T. In the case of short-circuit of the switch T, the latter always allows the connection between A and B: the failure cannot be detected by the downstream device B and, in the case of an alarm, the switch T does not open, preventing the possibility of blocking the transmission of data.

In order to avoid this drawback the transmission system of figure 2 comprises two switches in series T1 and T2 commanded by the alarm AL. However, also in this case it may be the case that, over time, both of the switches T1 and T2 are short-circuited, even at very different moments in time. Thus, it is not possible for external operators to know when such failures have occurred.

Moreover, in the field of digital electronics, sometimes certain devices, whilst having their power supply stopped through switches, are nevertheless supplied with power through the input terminals, or through internal joints of the silicon substrate on which they are made, and/or through other components connected to them, for which reason there is the risk that, even in the case of detection of an alarm signal, there are still certain devices that switch back on and continue to process, transmit and possibly display incorrect data. In a display system that is critical from the safety point of view, this phenomenon creates a dangerous situation, since incorrect information is given to an operator.

Prior-art document WO89/02124 shows a conventional fail-safe set-up comprising two switches in series. If one switch fails in the closed position, then the other switch continues to work. The document US2006/0041631 shows how to convey data over a clock line, by modulating the clock signal without comprising the use of the clock signal at the receiving end. Document DE 102 49 592 shows a fail-silent data unit, that bases on duplication of entities and actions, preventing the so-called babbling idiot syndrome. Document US2004/0263223 and US2006/0001494 both show two PLLs in cascade.

Therefore, there is a great need to implement techniques capable of preventing a situation in which failures within a data transmission system leads to incorrect data being transmitted.

In particular, it would be preferable to have a fail-silent type operation, i.e. able to ensure that, even in the presence of a failure, no data is transmitted in the case of an alarm. In this way, in a display system, no incorrect information could be represented to an operator.

The technical problem at the basis of the present invention is to provide a technique capable of raising the degree of safety of a transmission system of critical data from the safety point of view, in particular used in vital systems, so as to obtain a fail-silent type behaviour able to detect failures, and prevent the generation of latent failures.

### Summary of the invention

The technical problem is solved by a transmission circuit of a clock signal for transmitting synchronous digital signals, between an upstream device and a downstream device connected by said circuit, which has a first input terminal connected to an output terminal of said upstream device and receiving from it an input clock signal at a predetermined frequency, and an output terminal connected to an input terminal of said downstream device and supplying it with an output clock signal at a predetermined frequency; as well as a second input terminal receiving an alarm signal from an external device, the circuit being characterised in that it comprises at least:
- a first component being structured so as to modify a frequency value of said input clock signal and provide an intermediate clock signal, and
- a second component being structured so as to modify a frequency value of said intermediate clock signal;
   said first and second components being connected together in cascade between said first input terminal and said output terminal and being connected to said second input terminal so as to:
- neutralising one another the modifications made to the frequency of said clock signal, in the absence of an external alarm signal, and
- preventing the passage of said clock signal, in the presence of an external alarm signal,
   in the case of failure of one of said first and second components, said downstream device receiving a clock signal with a different frequency value to a nominal frequency.

In this way, in the absence of failures in the first and second component, in the absence of detection of an alarm signal, the frequency of said clock signal undergoes a first modification and a second modification, which actuates a reverse operation to the first modification. Said second modification neutralises said first modification, so that the downstream device receives the correct frequency of said clock signal. Therefore, the downstream device receives the data correctly and can reprocess, transmit or display it.

On the other hand, in the presence of a failure in the first or second component, irrespective of whether the alarm signal has been detected, the two components are no longer able to mutually neutralise the modifications made to the frequency of the clock signal, and thus to the downstream device is sent a clock signal with an incorrect frequency, so as to prevent the signals being read, and consequently transmitted.

According to an aspect of the present invention, the first and second components carry out inverse operations on the clock frequency, so that said inverse operations, in the absence of failures, neutralise one another.

The aforementioned first and second components can be phase locked loops or PLLs, for example a first PLL dividing the frequency by a factor k and a second PLL multiplying the frequency by the same factor k, so as to neutralise the modifications, in the case of absence of failures. Therefore, in the case of short-circuit of one of the PLLs, the frequency of the clock signal received by the downstream device is multiplied or divided by said coefficient k, not foreseen. The downstream device can thus easily detect a frequency outside of the predetermined protocol and therefore the presence of the failure.

More specifically, according to an aspect of the present invention, said respective first and second components are phase locked loops able to divide, respectively multiply, the frequency of an input signal.

According to a further aspect of the present invention, said first and second components divide and multiply the frequency of an input signal by the same predetermined coefficient.

According to a further aspect of the present invention, the transmission circuit can also comprise an isolation means inserted between said first input terminal and said first component, an isolation means inserted between said second component and said output terminal, said isolation means being, for example, condensers, and a further isolation means inserted between said first and said second components, in particular a digital isolator, preferably of the condenser type.

According to such an aspect of the invention, the transmission circuit is particularly reliable from the safety point of view, thanks to the presence of isolators upstream and downstream of the PLL components, preferably made from isolation condensers, and the digital isolator of the transformer type, able to decouple said first and second PLL components. In this way, the advantage of preventing a component, even if ideally switched off, from remaining switched on accessing power through its inputs, or through internal joints of the silicon substrate, and/or other components is obtained.

According to a further aspect of the present invention, the transmission circuit can also comprise at least a first and a second linear regulator connected to said second input terminal and to said first and second components.

Furthermore, according to an aspect of the present invention, said first and second linear regulators can be connected to said further isolation means.

Finally, according to another aspect of the present invention, the second input terminal receives a voltage alarm signal having, in normal conditions, a value equal to a supply voltage value of said first and second components and, in the case of an alarm, a value of zero able to stop the power supply to said first and second components so as to prevent the passage of said clock signal from said upstream device to said downstream device.

In another aspect thereof, the present invention refers to a display system of critical data from the safety point of view in the form of synchronous digital signals transmitted through a synchronous transmission channel, comprising at least:
- a microprocessor suitable for receiving external data at an input terminal,
- a monitor suitable for displaying said critical data from the safety point of view on a screen, and
- a plurality of intermediate devices connected together in cascade between said microprocessor and said screen, characterised in that it comprises at least one transmission circuit of the type indicated above for transmitting a clock signal, said circuit being inserted between two consecutive intermediate devices in said cascade and being controlled by an external alarm signal received from an alarm device in turn receiving a notification of an alarm situation, said external alarm signal controlling said transmission circuit to block the transmission of said clock signal and the consequent displaying of said critical data in an alarm situation.

Advantageously, the transmission system according to an aspect of the present invention allows the use of alternative components to photo couplers, which, as known, require clock frequencies below 40 MHz.

Finally, in a further aspect thereof, the present invention refers to a method for transmitting synchronous digital data, between an upstream stage and a downstream stage in the presence of a clock signal at a predetermined frequency, said method foreseeing the following steps in succession:
- picking up and transmitting an input clock signal from said upstream stage towards a transmission circuit,
- first frequency variation of said input clock signal generating an intermediate clock signal,
- second frequency variation of said intermediate clock signal generating an output clock signal, and
- receiving said output clock signal by said downstream stage,
in which said first and second frequency variations are arranged so as to:
- neutralise one another, in the absence of an external alarm signal, and
- prevent the passage of said clock signal, in the presence of said external alarm signal (V),
an error in one of said first and second frequency variations resulting in the downstream stage receiving the output clock signal with a different frequency value to an expected value with detection of said error.

The characteristics and advantages of the present invention shall become clearer from the following description of an example embodiment thereof, given for indicating and not limiting purposes with reference to the attached drawings.

### Brief description of the drawings

In such drawings:
figures 1 and 2 show data transmission systems comprising switches controlled by alarms and made according to the prior art;
figure 3 shows a display system according to the present invention;
figure 4 shows a transmission circuit of a clock signal according to the present invention;
figure 5 shows the operation of the transmission circuit of the clock signal of figure 4 in the absence of failures and alarms;
figure 6 shows the operation of the transmission circuit of the clock signal of figure 4 in the absence of failures and in the presence of alarms;
figures 7 and 8 show the operation of the transmission circuit of the clock signal of figure 4 in the case of failure;

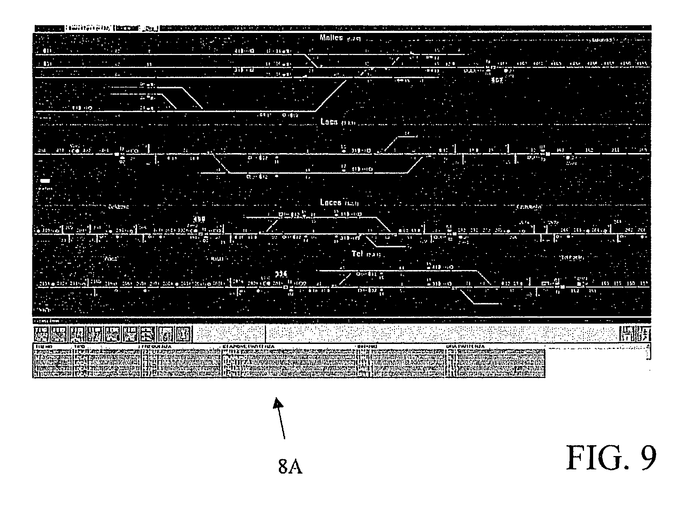

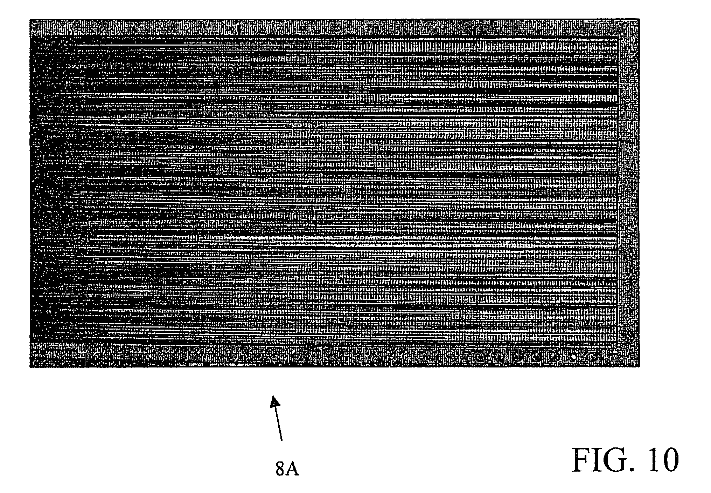

figures 9 and 10 show a display of a screen of the display system of figure 3 in the case of correct operation and in the case of failure, respectively.

### Detailed description

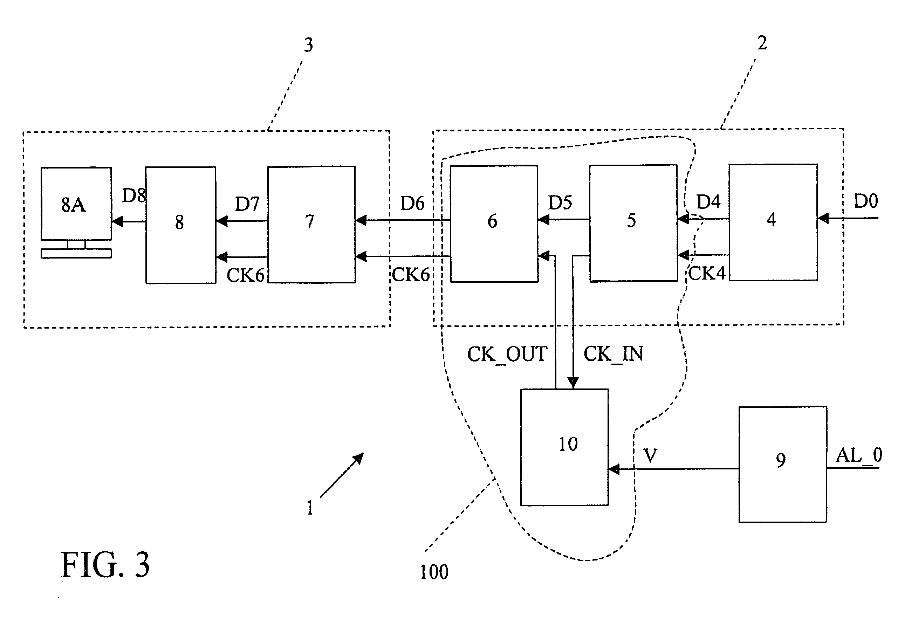

With reference to such figures and in particular to figure 3, a display system of critical data made according to the present invention and wholly indicated with 1 is illustrated. The system 1 is suitable for displaying critical data from the safety point of view on a monitor, like for example in the case of supervision of a train station. The display system 1 comprises, in particular, a cascade of devices arranged in succession that exchange data through their input and output terminals. Hereafter in the description, for the sake of simplicity, the same alphanumeric reference shall be used to indicate such input/output terminals as well as the signals and the data present on them.

Such a display system 1 illustrated in figure 3 comprises a personal computer or PC, indicated with 2, and a monitor, indicated with 3.

The PC 2 comprises a microprocessor 4, in turn including a CPU that controls the PC 2 in a *per sé* known way. Such a microprocessor 4 is in particular able to receive external data D0, for example coming from a central server through an intranet network. In the example indicated above, such data is relative to the position of the various trains on the tracks in a railway station.

The PC 2 also comprises a graphics card 5, which receives data D4 from the microprocessor 4.

The PC 2 also comprises a digital transmitter 6 downstream of the graphics card 5. Such a digital transmitter 6 receives data D5 from the graphics card 5, and sends data D6 on towards the monitor 3.

Said PC 2 can of course comprise other components, not illustrated since they are not of interest in the present document.

The monitor 3 in turn comprises a receiver 7 that receives the data D6, and a monitor controller 8, also equipped with a microprocessor, which receives data D7 sent by the receiver 7. The monitor controller 8 controls the physical emission of the pixels associated with the various display data on a screen 8A, for example of the LCD type.

The display system 1 thus comprises, according to an aspect of the present invention, at least the following devices: microprocessor 4, graphics card 5, digital transmitter 6, digital receiver 7, monitor controller 8, each of which is able to operate a particular stage of the data displaying process.

The data D0, D4, D5, D6, D7, D8 have the dual nature of being both display data, since it encodes the information relative to the images that should be displayed on the screen 8A, and critical data from the safety point of view, since, if incorrect, it can lead to catastrophic consequences.

Such data D0, D4, D5, D6, D7 and are exchanged, through known means, like for example cables, tracks, connectors. Each piece of data is exchanged, between an upstream device or stage and a downstream device or stage according to a specific protocol. In this case, the protocols for exchanging data D4, D5, D6 and D7 are of the synchronous type, with it being necessary for a clock signal to pass between the upstream device and the downstream device. In particular, the data D4 is exchanged through the clock signal CK4, the data D6 through the clock signal CK6, and D7 through the clock signal CK7. In particular, according to an aspect of the present invention, the system displays data in the form of synchronous digital signals transmitted through a synchronous transmission channel.

Advantageously, according to an aspect of the invention, the display system 1 also comprises a transmission circuit of the clock signal 10 that receives an input clock signal CK_IN coming from the graphics card 5, and supplies, towards an input of the digital transmitter 6, an output clock signal CK_OUT.

According to a predetermined communication protocol, the digital transmitter 6 receives the data D5 at a certain clock frequency, in the case illustrated as an example above 40 MHz.

Moreover, the display system 1 comprises an alarm device 9, capable of receiving an external alarm signal, in particular a notification of an alarm situation AL_0.

Such an alarm device 9 is connected to the transmission circuit of the clock signal 10 and is able to send an alarm signal V to it. In the present case, the alarm signal is a voltage signal having a maximum value in the absence of an alarm (V=5V), and a minimum value in the presence of an alarm (V=0), such a maximum value being able to supply power to the components of the transmission circuit of the clock signal 10 and such a minimum value corresponding to an interruption in the power supply of the same components, as shall become clear in the rest of the description.

The transmission circuit of the clock signal 10 is in particular able to prevent the passage of the clock signal between an upstream device or stage, in particular the graphics card 5, and a downstream device or stage, in particular the digital transmitter 6, inhibiting the output and interrupting the supply of the output clock signal CK_OUT: in this case, the graphics card 5 continues to transmit the data D5 with the correct input clock signal CK_IN, but the digital transmitter 6 receives in input an output clock signal CK_OUT that is constantly zero and thus stops sending data D6 representative of the data D4 sent by the microprocessor 4. The result is that the screen 8A stops transmitting interpretable data, so as to display to an operator that an alarm has occurred.

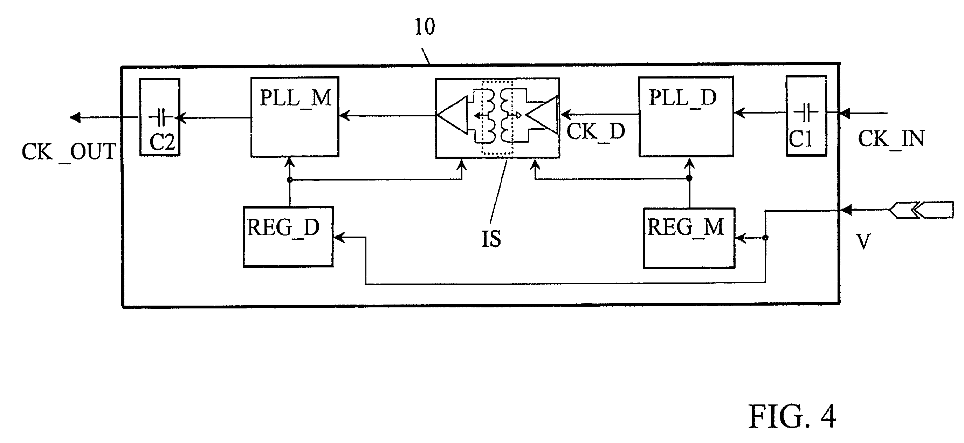

As illustrated in figure 4, according to a further aspect of the invention, the transmission circuit of the clock signal 10 comprises:
- a first input terminal CK_IN receiving the input clock signal, also indicated with CK_IN;
- a second input terminal V receiving the alarm signal; and
- an output terminal CK_OUT to supply the output clock signal, also indicated with CK_OUT.

The transmission circuit of the clock signal 10 comprises at least:
- a first component PLL_D able, in the absence of failures, to modify the frequency of the input clock signal CK_IN,
- a second component PLL_M able, in the absence of failures, to modify the frequency of the intermediate clock signal CK_D in output from said first component PLL_D and to supply in output the output clock signal CK_OUT.

The first component PLL_D is in particular a phase locked loop or PLL able to divide the frequency of an input signal, in particular the input clock signal CK_IN by a predetermined coefficient k (in the present case k=2), the second component PLL_M being a further phase locked loop or PLL able to multiply the frequency of an output signal always according to a predetermined coefficient, in particular by the same coefficient k.

According to an aspect of the present invention, the transmission circuit of the clock signal 10 also comprises isolation means, in particular a first and a second condenser C1 and C2 (for example of class Y2) respectively connected to the first and second PLL components and to the input and output terminals of the transmission circuit of the clock signal 10, as well as a further isolation means, in particular a digital isolator IS (for example an AduM110), of the transformer type, inserted between the two PLL components.

In other words, the transmission circuit of the clock signal 10 comprises, starting from the first input terminal CK_IN, the cascade of the first condenser C1, of the first component PLL_D, of the digital isolator IS, of the second component PLL_M and of the second condenser C1, in turn connected to the output terminal CK_OUT.

The transmission circuit of the clock signal 10 also comprises a first and a second linear regulator, REG_M and REG_D, connected to the second input terminal V and able to supply power to the two PLL components and the digital isolator IS. According to an aspect of the present invention, such linear regulators can be models LP38691-ADJ produced by National Semiconductor.

Advantageously, according to a further aspect of the present invention, the two linear regulators REG_M and REG_D are power supplied rightly from the alarm signal V and therefore:
- in the absence of an alarm, the digital regulators REG_M and REG_D are fed with a power of V=5V and allow the operation of the PLL components, PLL_D and PLL_M, allowing the passage of the clock signal from the first component PLL_D to the digital isolator IS and then to the second component PLL_M;
- in the presence of an alarm, the digital regulators REG_M and REG_D have their power supply stopped, since V=0, and they stop supplying power to the PLL components, PLL_D and PLL_M, preventing the passage of the clock signal from the first component PLL_D to the digital isolator IS and thus to the second component PLL_M.

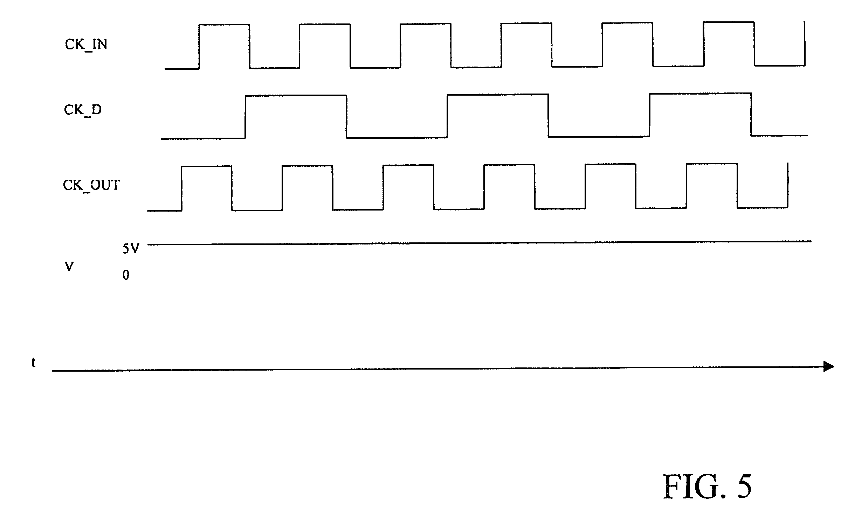

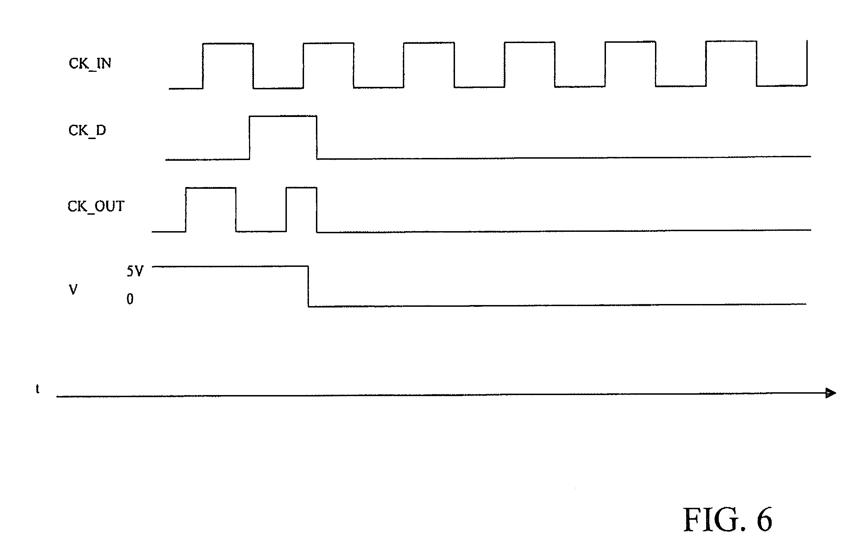

Figures 5 and 6 illustrate the operation of the transmission circuit of the clock signal 10 through the pattern of the input CK_IN, intermediate CK_D and output CK_OUT clock signals, respectively in the absence of failure (V=5V) or in the presence of failure (V that goes to 0V) in one of its components PLL_D and PLL_M.

In particular, figure 5 schematically illustrates the patterns of the various clock signals within the transmission circuit of the clock signal 10 (the delays imposed by the various components, for example by the condensers, are of no importance here, and therefore are illustrated purely for indicating purposes). In particular, it illustrates:
- the input clock signal CK_IN received by the first component PLL_D (in the example indicated earlier, generated by the graphics card 5);
- the intermediate clock signal CK_D in output from the first component PLL_D;
- the output clock signal CK_OUT generated by the transmission circuit of the clock signal 10.

It should be noted that the intermediate clock signal CK_D, generated in output from the first component PLL_D, is at half the frequency with respect to the frequency of the input clock signal CK_IN, (due to the fact that the first component PLL_D divides by a coefficient k=2, as indicated earlier), whereas the output clock signal CK_OUT is at the same frequency as the input clock signal CK_IN, the second component PLL_M multiplying by the same identical coefficient k=2 with respect to the division carried out by the first component PLL_D.

Advantageously, therefore, in the absence of the alarm signal V, the two PLL components neutralise one another the modifications made to the frequency of the clock signal that propagates in the transmission circuit of the clock signal 10.

Figure 6, again illustrating the patterns of the clock signals CK_IN, CK_D and CK_OUT within the transmission circuit of the clock signal 10, on the other hand, shows how such a transmission circuit works in the presence of an alarm signal. In this case, the alarm signal V is cancelled at a certain moment in time and the output clock signal CK_OUT is constantly zero from such a moment in time.

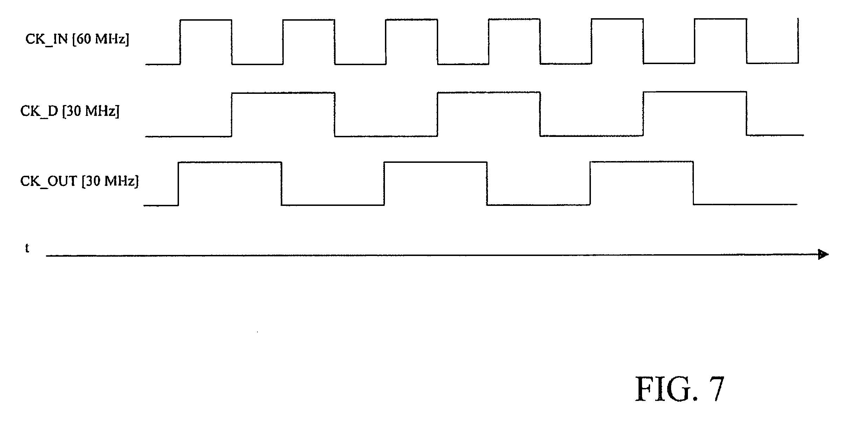

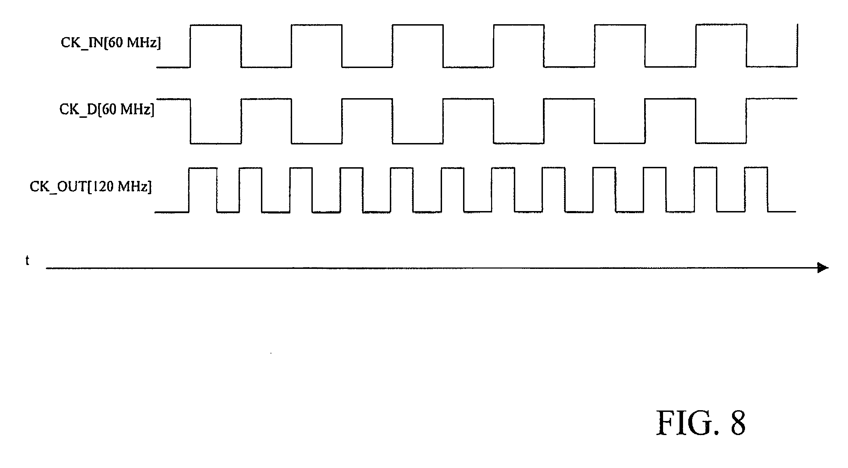

Similarly, figures 7 and 8, again illustrating the patterns of the clock signals CK_IN, CK_D and CK_OUT, show the operation of the transmission circuit of the clock signal 10 in the case of short-circuit of one of the two components PLL_D or PLL_M, respectively.

Advantageously, according to an aspect of the present invention, the transmission circuit of the clock signal 10, in the case of a short-circuit of the second component PLL_M, operates like in figure 7. In particular, in the presence of an input clock signal CK_IN at a nominal frequency, the frequency of the output clock signal CK_OUT is halved, the second component PLL_M not indeed compensating for the modifications or variations in frequency introduced by the first component PLL_D.

Advantageously, according to a further aspect of the present invention, the transmission circuit of the clock signal 10, in the case of a short-circuit of the first component PLL_D, operates like in figure 8. In particular, in the presence of an input clock signal CK_IN at a nominal frequency, the frequency of the output clock signal CK_OUT is doubled, since the halving carried out by the first component PLL_D is missing.

It is thus clear that the output clock signal CK_OUT of the transmission circuit of the clock signal 10, in the presence of a short-circuit of one of the two components PLL_D or PLL_M, still has a different frequency value to the nominal or expected one, which is an indication of a failure within the transmission circuit of the clock signal 10 itself.

In the case taken as an example, the digital transmitter 6 still receives data D5 in output from the graphics card 5, but with an incorrect clock frequency value, which translates into the loss of the display data: this is actually an optimal situation, because it allows the transmission of incorrect display data to be prevented, under all circumstances in the presence of failures.

In this way, a display system of critical data from the safety point of view in the form of synchronous digital signals transmitted through a synchronous transmission channel is thus made, comprising at least:
- the microprocessor 4 suitable for receiving external data D0 at an input terminal,
- the monitor 3 suitable for displaying the critical data on the screen 8A, and
- a plurality of intermediate devices, in particular the graphics card 5, the digital transmitter 6, the digital receiver 7 and the monitor controller 8, connected in cascade to each other between the microprocessor 4 and the screen 8A.

Advantageously, according to an aspect of the present invention, the system comprises at least one transmission circuit 10 as described above for transmitting a clock signal, such a circuit being inserted between two consecutive intermediate devices, in particular the graphics card 5 and the digital transmitter 6, and being controlled by the external alarm signal V received from the alarm device 9 in turn receiving notification of an alarm situation AL-0. In particular, the external alarm signal V drives the transmission circuit 10 to block the transmission of the clock signal and the consequent displaying of the critical data in an alarm situation.

It should be noted that the behaviour in the case of failure is independent of the presence of the alarm signal V: whatever the situation outside of the display system 1, the screen 8A will always no transmit intelligible data.

The digital isolator IS generally requires a sufficiently low frequency: advantageously, according to an aspect of the present invention, the fact that the first component PLL_D, which divides the frequency of the input clock signal CK_IN, is upstream of such a digital isolator IS, allows the occurrence of distortions to be reduced.

According to an aspect of the present invention, a digital isolator IS of the transformer type, with better performance than opto-isolators, which are slow, is used.

The presence of the condensers C 1 and C2 ensures the isolation of the PLL components, in particular it ensures that it is impossible to have different energy sources to the voltage due to the alarm signal V.

With reference to figures 3 and 4, the method for transmitting synchronous digital data, according to the invention, is now described. In particular, the method allows the transmission of synchronous digital data (D5), from an upstream stage 5 to a downstream stage 6 in the presence of a clock signal at a predetermined frequency.

Advantageously according to an aspect of the invention, the method foresees the following steps in sequence:
- picking up and transmitting an input clock signal CK_IN from the upstream stage 5 to a transmission circuit of the clock signal 10,
- first frequency modification or variation, through the first component PLL_D, of the input clock signal CK_IN generating an intermediate clock signal CK_D,
- second frequency modification or variation, through the second component PLL_M, of the intermediate clock signal CK_D generating an output clock signal CK_OUT, and
- reception of the output clock signal CK_OUT by the downstream stage 6,
in which the first and second frequency variation are arranged so as to:
- neutralise one another, in the absence of an external alarm signal V, and
- prevent the passage of the clock signal, in the presence of an external alarm signal V,
an error in one of such first and second frequency variations resulting in the output clock signal CK_OUT being received by the downstream stage 6 with a different frequency value to an expected value with detection of the error itself.

By errors in this document we mean the behaviour due to a failure, in particular to a short-circuit in the PLL components; of course, the failures due to the opening of connections are also supported, like in the prior art.

The invention allows good protection from latent failures, making them immediately visible, and making them look, in practice, as external alarms.

Of course, according to a further aspect of the present invention, the alarm device 9 could be integrated in the microprocessor 4.

In the same way, a display system could be made in which the upstream device or stage is the microprocessor and the downstream device or stage is the graphics card.

Finally, again with reference to figures 3 and 4, a system 100 for transmitting synchronous digital signals is described comprising an upstream device 5 connected for the transmission of synchronous digital data D5 to a downstream device 6,
- the upstream device 5 comprising an output clock terminal CK_IN for a clock signal at a predetermined frequency, and
- the downstream device 6 comprising an input clock terminal CK_OUT for a clock signal at a predetermined frequency,
characterised in that it comprises a transmission circuit of the clock signal 10 in turn comprising:
- a first input terminal CK_IN connected to the output clock terminal of the upstream device 5 and receiving an input clock signal CK_IN,
- an output terminal CK_OUT connected to the input terminal of the downstream device 6 and providing an output clock signal CK_OUT, and
- a second input terminal V receiving an alarm signal V from an external device 9, as well as:
- a first component PLL_D for modifying the frequency of the input clock signal CK_IN in the absence of failures, and
- a second component PLL_M for modifying the frequency of the output clock signal CK_OUT in the absence of failures;
so as to:
- neutralise one another the modifications made to the clock frequency, in the absence of an external alarm signal (V=5V), and
- prevent the passage of the clock signal in the presence of an external alarm signal (V=0),
so that a failure, in particular a short-circuit, of one of such first and second components, PLL_M and PLL_D, results in the output clock signal CK_OUT being received by said downstream device 6 with a different frequency value to a nominal frequency and consequent detection of the failure itself.

The present invention thus provides a transmission circuit of the clock signal, a display system of critical data and a relative method able to enhance the level of safety of a transmission system of critical data from the safety point of view, in particular for use in vital systems, so as to obtain a fail-silent type behaviour and able to allow the detection of internal failures, and to prevent the generation of latent failures, in this way overcoming the drawbacks highlighted in relation to known devices and methods.

In particular, the transmission circuit of the clock signal thanks to the presence of the PLL components, in the absence of the alarm signal V, neutralises the modifications made to the frequency of the clock signal that propagates, whereas, in the presence of the alarm signal V, it prevents the passage of the clock signal, in this way ensuring that incorrect information is not transmitted, for example shown to an operator.

Moreover, advantageously according to an aspect of the present invention, in the presence of a failure in the first or in the second PLL component, regardless of whether the alarm signal is detected, the two components are no longer able to neutralise one another the modifications made to the frequency of the clock signal, and thus to the downstream device is sent a clock signal with a different frequency value to a nominal frequency, so as to prevent the display system from reading the signals, and consequently preventing the transmission of incorrect information.

The transmission circuit and the method according to the present invention thus allow a good protection from latent failures, making them immediately visible, and making them look, in practice, as external alarms. In particular, a failure in one of the PLL components and therefore in the frequency variations applied by them results in an output clock signal being received with a different frequency value to an expected value and consequent detection of the failure itself.

Further advantageously according to an aspect of the present invention, the transmission circuit of the clock signal comprises upstream and downstream isolators, preferably made from isolation condensers, and a digital isolator of the transformer type, capable of decoupling the first and second PLL components. In this way, there is the advantage of preventing a component, even if ideally switched off, from remaining switched on accessing power through its inputs, or through internal joints of the silicon substrate, and/or other components.

Of course, a man skilled in the art can bring numerous modifications and variants to the circuit, to the method and to the system described above, in order to satisfy contingent and specific requirements, all of which are covered by the scope of protection of the invention as defined by the following claims.

## Claims

1. Transmission circuit (10) of a clock signal for transmitting synchronous digital signals (D5) between an upstream device (5) and a downstream device (6) connected by said circuit (10), which has a first input terminal connected to an output terminal of said upstream device (5) and receiving from it an input clock signal (CK_IN) at a predetermined frequency, and an output terminal connected to an input terminal of said downstream device (6) and supplying it with an output clock signal (CK_OUT) at a predetermined frequency; as well as a second input terminal receiving an alarm signal (V) from an external device (9), the circuit (10) being **characterised in that** it comprises at least:
- a first component (PLL_D) being structured so as to modify a frequency value of said input clock signal (CK_IN) and supply an intermediate clock signal (CK_D), and
- a second component (PLL_M) being structured so as to modify a frequency value of said intermediate clock signal (CK_D);
said first and second components (PLL_D, PLL_M) being connected together in cascade between said first input terminal and said output terminal and being connected to said second input terminal so as to:
- neutralise one another the modifications made to the frequency of said clock signal, in the absence of said external alarm signal (V), and
- prevent the passage of said clock signal, in the presence of said external alarm signal (V),
in the case of failure of one of said first and second components (PLL_D. PLL_M), said downstream device (6) receiving a clock signal with a different frequency value to a nominal frequency.

2. Transmission circuit according to claim 1, **characterised in that** said respective first and second components (PLL_D, PLL_M) are phase locked loops able to divide, respectively multiply, the frequency of an input signal.

3. Transmission circuit according to claim 2, **characterised in that** said first and second components (PLL_D, PLL_M) divide and multiply by the same predetermined coefficient (k).

4. Transmission circuit according to claim 1, **characterised in that** it comprises an isolation means (C1) inserted between said first input terminal (CK_IN) and said first component (PLL_D).

5. Transmission circuit according to claim 1, **characterised in that** it comprises an isolation means (C2) inserted between said second component (PLL_M) and said output terminal (CK_OUT).

6. Transmission circuit according to claim 4 or 5, **characterised in that** said isolation means (C1, C2) is a condenser.

7. Transmission circuit according to one of the previous claims, **characterised in that** it comprises a further isolation means (IS) inserted between said first and said second components (PLL_D, PLL_M).

8. Transmission circuit according to claim 7, **characterised in that** said further isolation means (IS) comprises a digital isolator, preferably of the condenser type.

9. Transmission circuit according to one of the previous claims, **characterised in that** it also comprises at least a first and a second linear regulator (REG_M, REG_D) connected to said second input terminal (V) and to said first and second components (PLL_D, PLL_M).

10. Transmission circuit according to claims 9 when dependent upon claim 7, **characterised in that** said first and second linear regulators (REG_M, REG_D) are connected to said further isolation means (IS).

11. Transmission circuit according to one of the previous claims, **characterised in that** said second input terminal (V) receives a voltage alarm signal having, in normal conditions, a value equal to a power supply voltage value of said first and second components (PLL_D, PLL_M) and, in the case of an alarm, a value of zero able to stop the supply of power to said first and second components (PLL_D, PLL_M), so as to prevent the passage of said clock signal from said upstream device (5) to said downstream device (6).

12. Display system of critical data from the safety point of view in the form of synchronous digital signals transmitted through a synchronous transmission channel, comprising at least:
- a microprocessor (4) suitable for receiving external data (D0) at an input terminal,
- a monitor (3) suitable for displaying said critical data on a screen (8A), and
- a plurality of intermediate devices (5, 6, 7, 8) connected together in cascade between said microprocessor (4) and said screen (8A), **characterised in that** it comprises a least one transmission circuit (10) according to one of the previous claims for transmitting a clock signal (CK_IN, CK_OUT), said circuit being inserted between two consecutive intermediate devices (5, 6, 7, 8) in said cascade and being controlled by an external alarm signal (V) received from an alarm device (9) in turn receiving notification of an alarm situation (AL_0), said external alarm signal (V) controlling said transmission circuit (10) to block the transmission of said clock signal and the consequent displaying of said critical data in an alarm situation.

13. Method for transmitting synchronous digital data, between an upstream stage (5) and a downstream stage (6) in the presence of a clock signal at a predetermined frequency, said method foreseeing the following steps in succession:
- picking up and transmitting an input clock signal (CK_IN) from said upstream stage (5) towards a transmission circuit (10),
- first frequency variation of said input clock signal (CK_IN) generating an intermediate clock signal (CK_D),
- second frequency variation of said intermediate clock signal (CK_D) generating an output clock signal (CK_OUT) and
- receiving said second clock signal (CK_OUT) by said downstream stage (6),
in which said first and second frequency variations are arranged so as to:
- neutralise one another, in the absence of an external alarm signal (V),
- prevent the passage of said clock signal (CK_IN, CK_OUT), in the presence of said external alarm signal (V),
an error in one of said first and second frequency variations resulting in the downstream stage (6) receiving the output clock signal with a different frequency value to an expected value with detection of said error.

## Patentansprüche

1. Übertragungsschaltung (10) eines Taktsignals zur Übertragung synchroner digitaler Signale (D5) zwischen einem vorgelagerten Element (5) und einem nachgelagerten Element (6), die durch die Schaltung (10) verbunden sind, die einen ersten Eingangsanschluss, der mit einem Ausgangsanschluss des vorgelagerten Elements (5) verbunden ist und von diesem ein Eingangstaktsignal (CK_IN) mit einer vorgegebenen Frequenz empfängt, und einen Ausgangsanschluss, der mit einem Eingangsanschluss des nachgelagerten Elements (6) verbunden ist und dieses mit einem Ausgangstaktsignal (CK_OUT) mit einer vorgegebenen Frequenz versorgt, und auch einen zweiten Eingangsanschluss, der ein Alarmsignal (V) von einem externen Element (9) empfängt, aufweist, wobei die Schaltung (10) **dadurch gekennzeichnet ist, dass** sie mindestens umfasst:
- ein erstes Bauteil (PLL_D), das so aufgebaut ist, dass es einen Frequenzwert des Eingangstaktsignals (CK_IN) modifiziert und ein Zwischentaktsignal (CK_D) bereitstellt, und
- ein zweites Bauteil (PLL_M), das so aufgebaut ist, dass es einen Frequenzwert des Zwischentaktsignals (CK_D) modifiziert,
wobei die ersten und zweiten Bauteile (PLL_D, PLL_M) zwischen dem ersten Eingangsanschluss und dem Ausgangsanschluss miteinander in einer Kaskadenschaltung verbunden sind und mit dem zweiten Eingangsanschluss verbunden sind, um:
- in Abwesenheit des externen Alarmsignals (V) gegenseitig die den Taktsignalen auferlegten Modifikationen zu neutralisieren, und
- in Anwesenheit des externen Alarmsignals (V) den Durchgang des Taktsignals zu verhindern,
wobei im Fall des Versagens eines der ersten und zweiten Bauteile (PLL_D, PLL_M) das nachgelagerte Element (6) ein Taktsignal mit einem von einer Nennfrequenz verschiedenen Frequenzwert empfängt.

2. Übertragungsschaltung nach Anspruch 1, **dadurch gekennzeichnet, dass** die ersten und zweiten Bauteile (PLL_D, PLL_M) Phasenregelkreise sind, die in der Lage sind, die Frequenz eines Eingangssignals zu dividieren beziehungsweise zu multiplizieren.

3. Übertragungsschaltung nach Anspruch 2, **dadurch gekennzeichnet, dass** die ersten und zweiten Bauteile (PLL_D, PLL_M) mit demselben vorgegebenen Koeffizienten teilen beziehungsweise multiplizieren.

4. Übertragungsschaltung nach Anspruch 1, **dadurch gekennzeichnet, dass** diese ein zwischen den ersten Eingangsanschluss (CK_IN) und das erste Bauteil (PLL_D) eingebrachtes Isoliermittel (C1) umfasst.

5. Übertragungsschaltung nach Anspruch 1, **dadurch gekennzeichnet, dass** diese ein zwischen das zweite Bauteil (PLL_M) und den Ausgangsanschluss (CK_OUT) eingebrachtes Isoliermittel (C2) umfasst.

6. Übertragungsschaltung nach Anspruch 4 oder 5, **dadurch gekennzeichnet, dass** das Isoliermittel (C1, C2) ein Kondensator ist.

7. Übertragungsschaltung nach einem der vorherigen Ansprüche, **dadurch gekennzeichnet, dass** diese ein zwischen die ersten und zweiten Bauteile (PLL_D, PLL_M) eingebrachtes weiteres Isoliermittel (IS) umfasst.

8. Übertragungsschaltung nach Anspruch 7, **dadurch gekennzeichnet, dass** das weitere Isoliermittel (IS) einen digitalen Isolator, vorzugsweise nach Art eines Kondensators, umfasst.

9. Übertragungsschaltung nach einem der vorherigen Ansprüche, **dadurch gekennzeichnet, dass** diese auch mindestens einen ersten und einen zweiten Linearregler (REG_M, REG_D) umfasst, die mit dem zweiten Eingangsanschluss (V) und den ersten und zweiten Bauteilen (PLL_D, PLL_M) verbunden sind.

10. Übertragungsschaltung nach Anspruch 9, wenn dieser abhängig von Anspruch 7 ist, **dadurch gekennzeichnet, dass** die ersten und zweiten Linearregler (REG_M, REG_D) mit dem weiteren isoliermittel (IS) verbunden sind.

11. Übertragungsschaltung nach einem der vorherigen Ansprüche, **dadurch gekennzeichnet, dass** der zweite Eingangsanschluss (V) ein Spannungsalarmsignal empfängt, das im Normalfall einen Wert aufweist, der identisch ist mit einem Energieversorgungsspannungswert der ersten und zweiten Bauteile (PLL_D, PLL_M), und im Alarmfall einen Wert von Null aufweist, der in der Lage ist, die Energieversorgung der ersten und zweiten Bauteile (PLL_D, PLL_M) zu stoppen, um den Durchgang des Taktsignals von dem vorgelagerten Element (5) zu dem nachgelagerten Element (6) zu verhindern.

12. Anzeigesystem von aus Sicherheitssicht kritischen Daten in Form von synchronen digitalen Signalen, die durch einen synchronen Übertragungskanal übertragen werden, umfassend mindestens:
- einen zum Empfang von externen Daten (D0) an einem Eingangsanschluss geeigneten Mikroprozessor (4),
- einen zur Anzeige der kritischen Daten an einem Bildschirm (8A) geeigneten Monitor (3), und
- eine Vielzahl von Zwischenelementen (5, 6, 7, 8), die zwischen dem Mikroprozessor (4) und dem Bildschirm (8A) miteinander in einer Kaskadenschaltung verbunden sind, **dadurch gekennzeichnet, dass** dieses mindestens eine Übertragungsschaltung (10) nach einem der vorherigen Ansprüche zur Übertragung eines Taktsignals (CK_IN, CK_OUT) umfasst, wobei die Schaltung zwischen zwei aufeinanderfolgenden Zwischenelementen (5, 6, 7, 8) in die Kaskadenschaltung eingebracht ist und von einem empfangenen externen Alarmsignal (V) eines Alarmelements (9) gesteuert wird, das wiederum die Benachrichtigung über eine Alarmsituation (AL_O) empfängt, wobei das externe Alarmsignal (V) die Übertragungsschaltung (10) zum Blockieren der Übertragung des Taktsignals und zur folgerichtigen Anzeige der kritischen Daten in einem Alarmzustand steuert.

13. Verfahren zur Übertragung synchroner digitaler Daten zwischen einem vorgelagerten Abschnitt (5) und einem nachgelagerten Abschnitt (6) in der Anwesenheit eines Taktsignals mit einer vorgegebenen Frequenz, wobei das Verfahren nacheinander die folgenden Schritte vorsieht:
- Aufnehmen und Übertragen eines Eingangstaktsignals (CK_IN) von dem vorgelagerten Abschnitt (5) zu einer Übertragungsschaltung (10),
- erste Frequenzvariation des Eingangstaktsignals (CK_IN) und Generieren eines Zwischentaktsignals (CK_D),
- zweite Frequenzvariation des Zwischentaktsignals (CK_D) und Generieren eines Ausgangstaktsignals (CK_OUT) und
- Empfang des zweiten Taktsignals (CK_OUT) durch den nachgelagerten Abschnitt (6),
wobei die ersten und zweiten Frequenzvariationen durchgeführt werden, um:
- sich in Abwesenheit eines externen Alarmsignals (V) gegenseitig zu neutralisieren,
- in Anwesenheit des externen Alarmsignals (V) den Durchgang des Taktsignals (CK_IN, CK_OUT) zu verhindern,
wobei ein Fehler in einem der ersten und zweiten Frequenzvariationen dazu führt, dass mit der Detektion des Fehlers der nachgelagerte Abschnitt (6) das Ausgangstaktsignal mit einem von einem erwarteten Wert verschiedenen Frequenzwert empfängt.

## Revendications

1. Circuit de transmission (10) d'un signal d'horloge pour transmettre des signaux numériques synchrones (D5) entre un dispositifs amont (5) et un dispositif aval (6) connectés par ledit circuit (10), qui a une première borne d'entrée connectée à une borne de sortie dudit dispositif amont (5) et recevant de celle-ci un signal d'horloge d'entrée (CK_IN) à une fréquence prédéterminée, et une borne de sortie connectée à une borne d'entrée dudit dispositif aval (6) et lui délivrant un signal d'horloge de sortie (CK_OUT) à une fréquence prédéterminée, ainsi qu'une deuxième borne d'entrée recevant un signal d'alarme (V) provenant d'un dispositif externe (9), le circuit (10) étant **caractérisé en ce qu'**il comprend au moins :
un premier composant (PLL_D) structuré de manière à modifier une valeur de fréquence dudit signal d'horloge d'entrée (CK_IN) et à délivrer un signal d'horloge intermédiaire (CK_D), et
un deuxième composant (PLL_M) structuré de manière à modifier une valeur de fréquence dudit signal d'horloge intermédiaire (CK_D) ;
lesdits premier et deuxième composants (PLL_D, PLL_M) étant connectés ensemble en cascade entre ladite première borne d'entrée et ladite borne de sortie, et étant connectés à ladite deuxième borne d'entrée de manière à :
neutraliser l'un l'autre les modifications apportées à la fréquence dudit signal d'horloge en l'absence dudit signal d'alarme externe (V), et
empêcher le passage dudit signal d'horloge en présence dudit signal d'alarme externe (V),
en cas de panne d'un desdits premier et deuxième composants (PLL_D, PLL_M), ledit dispositif aval (6) reçoit un signal d'horloge avec une valeur de fréquence différente de la fréquence nominale.

2. Circuit de transmission selon la revendication 1, **caractérisé en ce que** lesdits premier et deuxième composants (PLL_D, PLL_M) respectifs sont des boucles à verrouillage de phase capables de diviser, respectivement multiplier, la fréquence d'un signal d'entrée.

3. Circuit de transmission selon la revendication 2, **caractérisé en ce que** lesdits premier et deuxième composants (PLL_D, PLL_M) divisent et multiplient par le même coefficient prédéterminé (k).

4. Circuit de transmission selon la revendication 1, **caractérisé en ce qu'**il comprend un moyen d'isolation (C1) inséré entre ladite première borne d'entrée (CK_IN) et ledit premier composant (PLL_D).

5. Circuit de transmission selon la revendication 1, **caractérisé en ce qu'**il comprend un moyen d'isolation (C2) inséré entre ledit deuxième composant (PLL_M) et ladite borne de sortie (CK_OUT).

6. Circuit de transmission selon la revendication 4 ou la revendication 5, **caractérisé en ce que** lesdits moyens d'isolation (C1, C2) sont un condensateur.

7. Circuit de transmission selon l'une quelconque des revendications précédentes, **caractérisé en ce qu'**il comprend un autre moyen d'isolation (IS) inséré entre ledit premier et ledit deuxième composant (PLL_D, PLL_M).

8. Circuit de transmission selon la revendication 7, **caractérisé en ce que** ledit autre moyen d'isolation (IS) comprend un isolateur numérique, de préférence de type condensateur.

9. Circuit de transmission selon l'une quelconque des revendications précédentes, **caractérisé en ce qu'**il comprend au moins des premier et deuxième régulateurs linéaires (REG_M, REG_D) connectés à ladite deuxième borne d'entrée (V) et auxdits premier et deuxième composants (PLL_D, PLL_M).

10. Circuit de transmission selon la revendication 9 lorsque celle-ci est subordonnée à la revendication 7, **caractérisé en ce que** lesdits premier et un deuxième régulateurs linéaires (REG_M, REG_D) sont connectés audit autre moyen d'isolation (IS).

11. Circuit de transmission selon l'une quelconque des revendications précédentes, **caractérisé en ce que** ladite deuxième borne d'entrée (V) reçoit un signal d'alarme de tension ayant, dans des conditions normales, une valeur égale à une valeur de tension d'alimentation desdits premier et deuxième composants (PLL_D, PLL_M) et, en cas d'alarme, une valeur nulle capable d'arrêter l'alimentation vers lesdits premier et deuxième composants (PLL_D, PLL_M), de manière à empêcher le passage dudit signal d'horloge dudit dispositif amont (5) vers ledit dispositif aval (6).

12. Système d'affichage de données critiques du point de vue de la sécurité sous la forme de signaux numériques synchrones transmis à travers un canal de transmission synchrone, comprenant au moins :
un microprocesseur (4) adapté pour recevoir des données externes (D0) au niveau d'une borne d'entrée,
un écran (3) adapté pour afficher lesdites données critiques sur un écran (8A), et
une pluralité de dispositifs intermédiaires (5, 6, 7, 8) connectés ensemble en cascade entre ledit microprocesseur (4) et ledit écran (8A), **caractérisé en ce qu'**il comprend au moins un circuit de transmission (10) selon une des revendications précédentes pour transmettre un signal d'horloge (CK_IN, CK_OUT), ledit circuit étant inséré entre deux dispositifs intermédiaires consécutifs (5, 6, 7, 8) dans ladite cascade et étant contrôlé par un signal d'alarme externe (V) reçu d'un dispositif d'alarme (9) recevant à son tour une notification d'une situation d'alarme (AL_O), ledit signal d'alarme externe (V) contrôlant ledit circuit de transmission (10) pour bloquer la transmission dudit signal d'horloge et l'affichage qui s'en suit desdites données critiques dans une situation d'alarme.

13. Procédé de transmission de données numériques synchrones entre un étage amont (5) et un étage aval (6) en présence d'un signal d'horloge à une fréquence prédéterminée, ledit procédé prévoyant les étapes suivantes successives, consistant à :
collecter et transmettre un signal d'horloge d'entrée (CK_IN) depuis ledit étage amont (5) vers un circuit de transmission (10),
la première variation de fréquence dudit signal d'horloge d'entrée (CK_IN) générant un signal d'horloge intermédiaire (CK_D),
la deuxième variation de fréquence dudit signal d'horloge intermédiaire (CK_D) générant un signal d'horloge de sortie (CK_OUT), et
recevoir ledit deuxième signal d'horloge (CK_OUT) par ledit étage aval (6),
où lesdites première et deuxième variations de fréquence sont arrangées de manière à :
se neutraliser l'une l'autre en l'absence d'un signal d'alarme externe (V), et
empêcher le passage dudit signal d'horloge (CK_IN, CK_OUT) en présence dudit signal d'alarme externe (V),
une erreur dans une desdites première et deuxième variations de fréquence conduisant à ce que l'étage aval (6) reçoive le signal d'horloge de sortie avec une valeur de fréquence différente d'une valeur attendue, avec détection de ladite erreur.
